# EUROPÄISCHE PATENTSCHRIFT

(11) **EP 1 691 101 B1**
(45) Veröffentlichungstag und Bekanntmachung des Hinweises auf die Patenterteilung: **20.02.2008**
(21) Anmeldenummer: 05025270.9
(22) Anmeldetag: 18.11.2005
(51) Int. Cl.: F16D 65/092

(54) **Mehrscheibenbremse für Fahrzeuge, insbesondere Doppelscheibenbremse für Kraftfahrzeuge**
Multi-disc brake for vehicles, in particular dual disc brake for motor vehicles
Frein multi-disques pour véhicules, en particulier frein à deux disques pour véhicules automobiles

(30) Priorität: 11.02.2005 DE 102005006298
(43) Veröffentlichungstag der Anmeldung: 16.08.2006
(73) Patentinhaber: AUDI AG, 85045 Ingolstadt (DE)
(72) Erfinder: Jäger, Karl, 85049 Ingolstadt (DE)
(74) Vertreter: Asch, Konrad

(56) Entgegenhaltungen:
- DE-U1- 8 512 757
- DE-U1- 29 904 087
- US-A- 4 605 103

## Beschreibung

Die Erfindung betrifft eine Mehrscheibenbremse für Fahrzeug, insbesondere eine Doppelscheibenbremse für Kraftfahrzeuge, nach dem Oberbegriff des Anspruchs 1, sowie ein mittleres Bremsbelagelement nach dem Oberbegriff des Anspruchs 8.

Mehrscheibenbremsen mit mehreren hintereinander angeordneten Bremsscheiben an Rädern von Kraftfahrzeugen sind allgemein bekannt, z. B. ist eine Doppelscheibenbremse für Kraftfahrzeuge unter der Bezeichnung MTB (Maximum Torque Brake) bekannt. Bei dieser Doppelscheibenbremse sind pro Fahrzeugrad zwei Bremsscheiben vorgesehen, die auf einer Nabe in Axialrichtung der Bremsscheiben gesehen verlagerbar sind. In einem Bremsscheibenzwischenraum zwischen den beiden Bremsscheiben ist eine mittlere Bremsbelaganordnung vorgesehen, die eine durch eine starre Rückenplatte ausgebildete starre Trägerschicht aufweist, die auf ihrer der ersten Bremsscheibe zugeordneten ersten Trägerseite einen ersten Bremsbelag und auf ihrer der zweiten Bremsscheibe zugeordneten zweiten Trägerseite einen zweiten Bremsbelag aufweist. Auf der dem Bremsscheibenzwischenraum abgewandten Seite jeder Bremsscheibe ist zudem jeweils ein äußerer Bremsbelag vorgesehen. Eine derartige Doppelscheibenbremse hat somit vier anstatt der bisher in Verbindung mit einer Bremsscheibe pro Rad üblichen zwei Reibpunkte. Diese vier Bremsbeläge weisen bei nicht betätigter Bremse einen Spaltabstand zu der jeweils zugeordneten Bremsscheibe auf. Bei einer Bremsenbetätigung überträgt dagegen ein hydraulisch bewegter Bremskolben die Bremskraft auf die vier Bremsbeläge, wobei in Verbindung mit einem fest fixierten Bremssattel zuerst ein erster äußerer Bremsbelag an die erste Bremsscheibe gedrückt wird. Anschließend drückt dann die erste Bremsscheibe auf den dieser zugeordneten ersten Bremsbelag der mittleren Bremsbelaganordnung, was dazu führt, dass daraufhin der der zweiten Bremsscheibe zugeordnete zweite Bremsbelag der mittleren Bremsbelaganordnung auf die zweite Bremsscheibe drückt, die dann gegen den zweiten äußeren bzw. radseitig gesehen inneren Bremsbelag und den feststehenden Bremssattel gepresst wird. Mit einer derartigen Doppelscheibenbremse kann im Vergleich zu konventionellen Einfachscheibenbremsen mit dem gleichen Bremsscheibendurchmesser eine erhöhte Bremskraft erzeugt werden oder aber auch die gleiche Bremskraft bei kleineren Abmessungen der Bremsanlage erreicht werden. Versuche mit derartigen Doppelscheibenbremsanordnungen haben jedoch gezeigt, dass bei bestimmten Scheibentemperaturen und bestimmten Bremsdrücken, insbesondere bei mittleren Scheibentemperaturen und geringen Bremsdrücken, störende Bremsgeräusche (Bremsenquietschen) auftreten.

Aus der gattungsbildenden US 4,605,103 ist bereits eine Mehrscheibenbremse für Fahrzeuge mit einem in einem Bremsscheibenzwischenraum zwischen zwei in Axialrichtung benachbarten Bremsscheiben angeordnetem mittleren Bremsbelagelement bekannt. Konkret sind hier zwei Bremsscheiben vorgesehen, von denen eine fest, die andere dagegen mittels einer Verschiebeeinrichtung verlagerbar ist. Diese Bremsscheiben wirken jeweils mit einem Paar von sogenannten Reibblöcken als Bremsbelagelementen zusammen. Insbesondere sind hier Maßnahmen vorgesehen, mit denen Schrägstellungen und damit Verklemmungen von Bremsscheiben bzw. von Bremsbelägen vermieden werden können.

Weiter ist aus der DE 85 12 757 U1 eine Verbundplatte bekannt, die in Verbindung mit einer Teilbelagscheibenbremse zwischen einem Betätigungsglied, wie beispielsweise einem Kolben oder einem Sattel, und einer Belagträgerplatte einer Bremsbacke eingefügt und mit beiden verklebt werden kann. Zudem sind Maßnahmen vorgesehen, um an der als Verbundplatte bezeichneten Belagträgerplatte einen an der Klebeschicht nicht haftenden Abschnitt der Schutzschicht zu finden oder zu schaffen, der einfach und leicht mit Fingern erfasst werden kann, so dass sich die Schutzschicht von der Klebeschicht abziehen lässt. Dies wird dadurch erreicht, dass der nicht haftende Abschnitt der Schutzschicht als Schlaufe ausgebildet wird.

Zudem ist aus der DE 299 04 087 U1 ein Dämpfungsblech bekannt, das nach seiner Montage nicht nur mit der Trägerplatte der Bremsbacke, sondern zusätzlich mit dem Bremskolben oder einer Anlagefläche eines Schwimmsattels einer Scheibenbremse verbunden ist.

Aufgabe der Erfindung ist es, eine Mehrscheibenbremse für Fahrzeuge, insbesondere für Kraftfahrzeuge, so weiterzubilden, dass neben der Beseitigung störender Bremsengeräusche bei einer Bremsenbetätigung auch ein einfacher und funktionssicher konstruktiver Aufbau der Mehrscheibenbremse zur Verfügung gestellt wird.

Diese Aufgabe wird zum einen gelöst mit den Merkmalen des Patentanspruchs 1 und zum anderen mit den Merkmalen des Patentanspruchs 8.

Erfindungsgemäß wird zum einen eine Dämpfungsschicht vorgesehen, die die bei der Bremsenbetätigung auftretenden Bremsscheibenschwingungen dämpft, so dass dadurch das als störend empfundene, akustisch wahrnehmbare Bremsenquietschen bei der Bremsenbetätigung insbesondere in Verbindung mit mittleren Scheibentemperaturen und geringen Bremsdrücken wesentlich gedämpft bzw. ggf. sogar ganz vermieden werden kann.

Zum anderen ist vorgesehen, dass die beiden Bremsbeläge jeweils auf einer starren Rückenplatte angeordnet sind, so dass die Bremsbeläge mittelbar über die starre Rückenplatte mit der Dämpfungsschicht verbunden sind. Zur Verbindung bzw. Fixierung der Bremsbeläge mit bzw. an der Dämpfungsschicht ist eine kraftschlüssige und gegebenenfalls eine stoffschlüssige Verbindung vorgesehen. Im Falle der Verwendung einer Stoffschlussverbindung wird eine hochtemperaturfeste Klebeverbindung bevorzugt. Weiter ist erfindungsgemäß vorgesehen, dass die Rückenplatten die Bremsbeläge überragende Plattenbereiche aufweisen, so dass die kraftschlüssige Verbindung der Rückenplatten in den die Bremsbeläge überragenden Bereichen ausgebildet werden kann. Hierbei ist die Verwendung einer Schraub- und/oder Nietverbindung möglich.

Grundsätzlich gibt es verschiedene Möglichkeiten, diese die beiden mittleren Bremsbeläge voneinander trennende Dämpfungsschicht auszubilden, so z. B. durch das Vorsehen einer Federanordnung, z. B. einer Tellerfederanordnung. Bevorzugt und einfacher ist jedoch die Dämpfungsschicht nach Anspruch 2 so ausgebildet, dass diese wenigstens in den den Bremsbelägen zugeordneten Randbereichen aus einem reversibel nachgiebigen Material ausgebildet ist, das bei einer durch Bauteilschwingungen resultierenden Schwingungsbelastung seine Form reversibel innerhalb vorgegebener Bereiche verändern kann. Unter einem nachgiebigen Material wird somit ein Material verstanden, das in gewisser Weise elastomere bzw. federnde bzw. flexible Eigenschaften aufweist, dessen bei der Bremsbetätigung bewirkte Formveränderung bei nicht betätigter Bremse wieder rückgängig gemacht wird, so dass die Dämpfungsschicht wieder in ihre Ausgangsform annimmt.

Dementsprechend ist gemäß einer besonders bevorzugten konkreten Ausgestaltung nach Anspruch 3 vorgesehen, dass die Dämpfungsschicht durch eine Elastomerschicht gebildet ist, wobei das Elastomer, insbesondere ein Gummimaterial, je nach den konkret gegebenen Bremsparametern eine bestimmte Shore-Härte aufweisen kann. Besonders bevorzugt ist in diesem Zusammenhang ein Aufbau gemäß Anspruch 4, bei dem die Elastomerschicht einen plattenförmigen Kern aus einem starren Material, insbesondere aus einem nichtrostenden Blechmaterial aufweist, auf den die Elastomerschicht beidseitig aufgebracht, vorzugsweise als Gummischicht vorgegebener Wandstärke aufvulkanisiert ist. Eine derartige Elastomerschicht als Dämpfungsschicht, insbesondere in der Form eines Gummi-Metall-Elementes mit einem Kern aus einem Blechmaterial ist hervorragend geeignet zur Ausbildung der die beiden Bremsbeläge der mittleren Bremsbelaganordnung voneinander zur Schwingungsdämpfung trennenden bzw. entkoppelnden Dämpfungsschicht, da im Falle einer Bremsbetätigung die dann unter Spannung stehende Elastomerschicht eventuell auftretende Bauteilschwingungen, insbesondere Bremsscheibenschwingungen, die z. B. im Bereich von ca. 1,6 kHz liegen können, sehr gut dämpfen bzw. absorbieren kann.

Grundsätzlich ist es jedoch auch möglich, die Dämpfungsschicht, wie dies mit Anspruch 5 beansprucht ist, unter Verwendung eines Kunststoff- und/oder Graphitmaterials auszubilden, z. B. auch in Form einer Dämpfungsfolie. Auch die Verwendung eines Silikonmaterials zur Ausbildung einer Silikonmassen-Dämpfungsschicht ist möglich.

Die die beiden Bremsbeläge trennende Dämpfungsschicht weist nach Anspruch 6 in Axialrichtung der Bremsscheiben gesehen eine Gesamtschichtdicke zwischen 0,5 und 2 mm, bevorzugt zwischen 0,8 und 1,5 mm auf. Besonders gute schwingungsdämpfende Ergebnisse lassen sich mit einer Schichtdicke zwischen 1,0 und 1,2 mm erzielen.

Mit den Merkmalen des Anspruchs 7 ist weiter der bevorzugte Gesamtaufbau einer erfindungsgemäßen Doppelscheibenbremse beansprucht, die die bevorzugt zwei weiteren äußeren Bremsbeläge, die Bremsscheibennabe als Bremsscheibenlagerung und eine Hydraulikeinrichtung zur Bremsenbetätigung betrifft.

Ein mittleres Bremsbelagelement zur Verwendung in Mehrscheibenbremsen ist Gegenstand des Anspruchs 8. Die zuvor gemachten Ausführungen treffen auch hier zu.

Die Erfindung wird nachfolgend anhand einer Zeichnung näher erläutert.

Es zeigen:
- **Fig. 1**: einen schematischen Querschnitt durch eine mittlere Bremsbelaganordnung für eine Doppelscheibenbremse,
- **Fig. 2**: eine erfindungsgemäße Auführungsform einer mittleren Bremsbelaganordnung,
- **Fig. 3**: eine schematische Prinzipdarstellung einer Doppelscheibenbremse im nicht betätigten Zustand,
- **Fig. 4**: eine schematische Prinzipdarstellung entsprechend **Fig. 3** bei betätigter Doppelscheibenbremse,

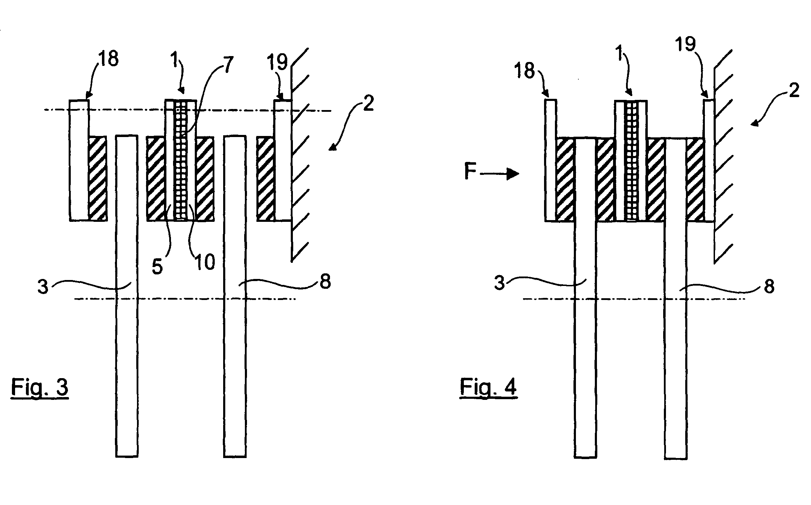

- **Fig. 3**: eine schematische Prinzipdarstellung einer Doppelscheibenbremse im nicht betätigten Zustand,
- **Fig. 4**: eine schematische Prinzipdarstellung entsprechend **Fig. 3** bei betätigter Doppelscheibenbremse,

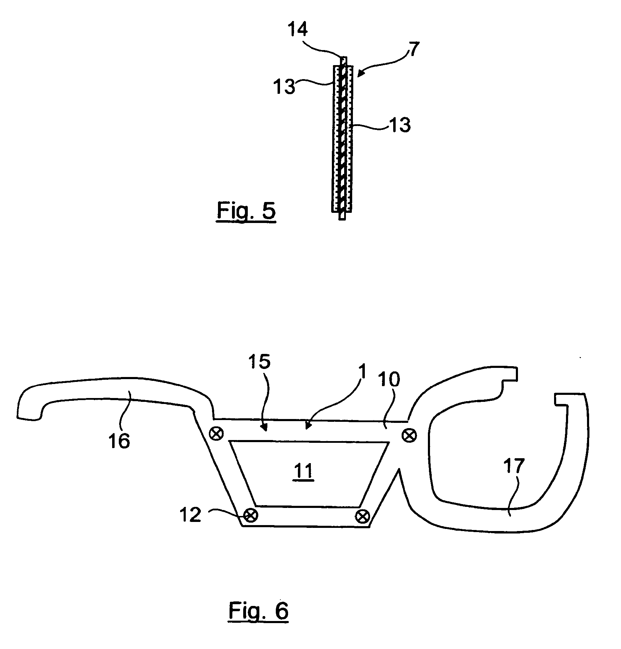

- **Fig. 5**: eine schematische Schnittdarstellung durch ein elastomerbeschichtetes Blech als Dämpfungsschicht, und
- **Fig. 6**: eine schematische Draufsicht auf eine beispielhafte Ausführungsform einer mittleren Bremsbelaganordnung.

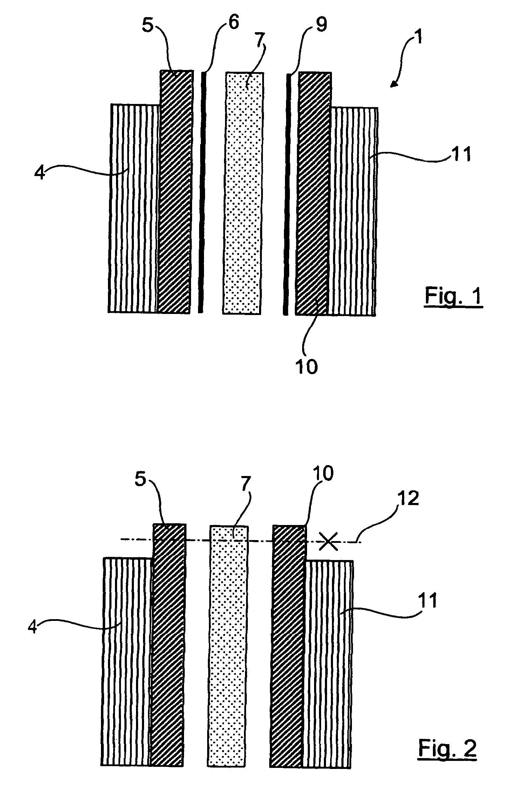

In **Fig. 1** ist schematisch ein Querschnitt durch eine mittlere Bremsbelaganodnung 1 gezeigt. Diese mittlere Bremsbelaganordnung 1 weist, wie dies insbesondere auch in Verbindung mit der **Fig. 3** ersichtlich ist, die einem prinzipiellen Grundaufbau einer Doppelscheibenbremse 2 für ein Fahrzeugrad zeigt, einen einer ersten Bremsscheibe 3 zugeordneten ersten Bremsbelag 4 auf, der auf einer ersten, starren Rückenplatte 5 angeordnet ist. Diese erste Rückenplatte 5 mitsamt erstem Bremsbelag 4 ist mittels einer hier durch eine Kleberschicht 6 dargestellten hochtemperaturfesten Klebeverbindung mit einer Dämpfungsschicht 7 verbunden, die auf ihrer der ersten Bremsscheibe 3 abgewandten und einer zweiten Bremsscheibe 8 zugeordneten Seite in analoger Weise über eine Kleberschicht 9 mit einer zweiten, starren Rückhalteplatte 10, auf der ein zweiter Bremsbelag 11 angeordnet ist, verbunden.

In der **Fig. 2** ist eine erfindungsgemäße Ausführungsform gezeigt, bei der die beiden starren Rückenplatten 5, 10 unter Zwischenschaltung der Dämpfungsschicht 7 nicht mittels einer Klebeverbindung verbunden sind, sondern, wie dies in der **Fig. 2** lediglich äußerst schematisch und beispielhaft angedeutet ist, mittels einer Schraubverbindung 12.

Die Dämpfungsschicht 7 ist hier z. B., wie dies in der **Fig. 5** im Detail dargestellt ist, durch ein beidseitig mit einer Elastomerschicht 13 beschichtetes Blech 14, vorzugsweise aus einem nicht rostenden Material, gebildet. Grundsätzlich kann diese Dämpfungsschicht 7 jedoch auch aus einer Silikonmasse oder in der Art einer Dämpfungsfolie aus einem Kunststoff- und/oder Graphitmaterial hergestellt sein.

Für den Fall der in der **Fig. 2** schematisch dargestellten Schraubverbindung ist eine Ausführung der mittleren Bremsbelaganordnung 1 bevorzugt, wie sie in der **Fig. 6** dargestellt ist, wobei erfindungsgemäß die beiden Rückenplatten 5, 10 den Bereich der Bremsbeläge 4, 11 überragen, so dass die Schraubverbindungen 12 in diesem die Bremsbeläge 4, 11 überragenden Plattenbereich 15 vorgesehen sein können. In der **Fig. 6** ist eine Ausführungsform mit auf den bezogen auf den Bremsbelag 4, 11 auf gegenüberliegenden Seiten eine unterschiedliche Geometrie aufweisenden Haltearmen 16, 17 der mittleren Bremsbelaganordnung 1 beispielhaft gezeigt.

Wie dies der **Fig. 3** weiter entnommen werden kann, ist der ersten Bremsscheibe 3 auf der der mittleren Bremsbelaganordnung 1 gegenüberliegenden Seite ein äußerer Bremsbelag 18 und entsprechend der zweiten Bremsscheibe 8 ein äußerer Bremsbelag 19 zugeordnet. Bei einer Bremsenbetätigung gelangen sämtliche vier Bremsbeläge 4, 11, 18 und 19 in eine Reib- und Anlageverbindung an den beiden Bremsscheiben 3, 8, wobei durch die Dämpfungsschicht 7 an der Doppelscheibenbremse 2 auftretende Bauteilschwingungen sehr gut gedämpft bzw. absorbiert werden können zur Vermeidung eines störenden Bremsgeräusches.

## Patentansprüche

1. Mehrscheibenbremse für Fahrzeuge, insbesondere Doppelscheibenbremse für Kraftfahrzeuge, mit einem in einem Bremsscheibenzwischenraum zwischen zwei in Axialrichtung benachbarten Bremsscheiben (3, 8) angeordneten mittleren Bremsbelagelement (1)
**dadurch gekennzeichnet,**
**dass** das mittlere Bremsbelagelement (1) eine Trägerschicht aufweist, die auf einer einer ersten Bremsscheibe (3) zugeordneten ersten Trägerseite einen ersten Bremsbelag (4) und auf einer einer zweiten Bremsscheibe(8) zugeordneten zweiten Trägerseite einen zweiten Bremsbelag (11) trägt, wobei die Trägerschicht als eine Dämpfungsschicht (7) ausgebildet ist, mit der die bei der Bremsbetätigung auftretenden Bauteilschwingungen dämpfbar und/oder absorbierbar sind,
**dass** die beiden Bremsbeläge (4, 11) jeweils auf einer starren Rückenplatte (5, 10) angeordnet sind, so dass die Bremsbeläge (4, 11) mittelbar über die starre Rückenplatte (5, 10) mit der Dämpfungsschicht (7) verbunden sind,
**dass** zur Verbindung der Bremsbeläge (4, 11) mit der Dämpfungsschicht (7) eine kraftschlüssige Verbindung, insbesondere eine Schraub- und/oder Nietverbindung (12) und gegebenenfalls eine stoffschlüssige Verbindung, insbesondere eine hochtemperaturfeste Klebeverbindung (6, 9) vorgesehen ist,
**dass** die Rückenplatten (5, 10) die Bremsbeläge (4, 11) überragende Plattenbereiche (15) aufweisen, und
**dass** die kraftschlüssige Verbindung (12) der Rückenplatten (5, 10) im die Bremsbeläge (4, 11) überragenden Bereich vorgesehen ist.

2. Mehrscheibenbremse nach Anspruch 1, **dadurch gekennzeichnet, dass** die Dämpfungsschicht (7) eine in Abhängigkeit von vorgegebenen Dämpfungsparametern vorgegebene Schichtdicke aufweist und wenigstens in den den Bremsbelägen (4, 11) zugeordneten Randbereichen aus einem reversibel nachgiebigen, insbesondere elastomerartige Eigenschaften aufweisenden Material ausgebildet ist.

3. Mehrscheibenbremse nach Anspruch 2, **dadurch gekennzeichnet, dass** die Dämpfungsschicht (7) durch eine Elastomerschicht gebildet ist.

4. Mehrscheibenbremse nach Anspruch 3, **dadurch gekennzeichnet, dass** die Dämpfungsschicht (7) einen plattenförmigen Kern (14) aus einem starren Material, vorzugsweise aus einem nichtrostendem Blechmaterial, aufweist, auf den beidseitig eine Elastomerschicht (13) aufgebracht, vorzugsweise eine Gummischicht aufvulkanisiert ist.

5. Mehrscheibenbremse nach Anspruch 2, **dadurch gekennzeichnet, dass** die Dämpfungsschicht aus einem Kunststoff- und/oder Graphit- und/oder Silikonmaterial gebildet ist.

6. Mehrscheibenbremse nach einem der Ansprüche 1 bis 6, **dadurch gekennzeichnet, dass** die Dämpfungsschicht (7) in Axialrichtung gesehen eine Schichtdicke zwischen 0,5 und 2 mm, bevorzugt zwischen 0,8 und 1,5 mm, höchst bevorzugt zwischen 1,0 und 1,2 mm aufweist.

7. Mehrscheibenbremse nach einem der Ansprüche 1 bis 6, **dadurch gekennzeichnet, dass** den beiden Bremsscheiben (3, 8) auf deren der jeweils anderen Bremsscheibe (3, 8) abgewandten Außenseite jeweils ein äußerer Bremsbelag (18, 19) zugeordnet ist,
**dass** die beiden Bremsscheiben (3, 8) auf einer Radnabe als Bremsscheibennabe verschiebbar gelagert sind, und
dass der Mehrbremsscheibenanordnung (2) eine Hydraulikeinrichtung zugeordnet ist, bei deren Betätigung ein der ersten Bremsscheibe (3) zugeordneter erster äußerer Bremsbelag (18) in Reibverbindung mit der ersten Bremsscheibe (3) die erste Bremsscheibe (3) anschließend in Reibverbindung mit dem ersten mittleren Bremsbelag (4) sowie der zweite mittlere Bremsbelag (11) in Reibverbindung mit der zweiten Bremsscheibe (8) und schließlich die zweite Bremsscheibe (8) in Reibverbindung mit einem dieser zweiten Bremsscheibe (8) zugeordneten zweiten äußeren Bremsbelag (19) bringbar ist.

8. Mittleres Bremsbelagelement (1) zur Verwendung in Mehrscheibenbremsen nach einem der Ansprüche 1 bis 7, **dadurch gekennzeichnet, dass** das mittlere Bremsbelagelement (1) entsprechend dem kennzeichnenden Teil des Anspruchs 1 ausgebildet ist.

## Claims

1. Multi-disc brake for vehicles, in particular dual-disc brake for motor vehicles, comprising a central brake pad element (1) arranged in a brake disc space between two brake discs (3, 8) adjacent to one another in the axial direction,
**characterised in that**
the central brake pad element (1) has a carrier layer provided on a first carrier side associated with a first brake disc (3) with a first brake pad (4) and on a second carrier side associated with a second brake disc (8) with a second brake pad (11), the carrier layer being designed as a damping layer (7) by means of which the component vibrations occurring during braking can be damped and/or absorbed,
the two brake pads (4, 11) are each arranged on a rigid brake pad plate (5, 10), so that the brake pads (4, 11) are connected indirectly to the damping layer (7) by means of the rigid brake pad plate (5, 10),
a non-positive connection, in particular a screwed and/or riveted joint (12), and possibly an adhesive connection, in particular a high-temperature resistant bonded joint (6, 9), are provided to connect the brake pads (4, 11) to the damping layer (7),
the brake pad plates (5, 10) have plate regions (15) projecting beyond the brake pads (4, 11) and
the non-positive connection (12) of the brake pad plates (5, 10) is provided in the region projecting beyond the brake pads (4, 11).

2. Multi-disc brake according to claim 1, **characterised in that** the damping layer (7) has a layer thickness predetermined as a function of predetermined damping parameters and at least in the edge regions associated with the brake pads (4, 11) is made of a reversibly compliant material displaying, in particular, elastomer-like properties.

3. Multi-disc brake according to claim 2, **characterised in that** the damping layer (7) is formed by an elastomer layer.

4. Multi-disc brake according to claim 3, **characterised in that** the damping layer (7) has a plate-like core (14) of a rigid material, preferably a rust-resistant sheet-metal material, an elastomer layer (13) being applied to both sides thereof, preferably a rubber layer being vulcanised thereon.

5. Multi-disc brake according to claim 2, **characterised in that** the damping layer is formed of a plastic and/or graphite and/or silicone material.

6. Multi-disc brake according to one of claims 1 to 6, **characterised in that** the damping layer (7) has a layer thickness of between 0.5 and 2 mm, preferably between 0.8 and 1.5 mm, most preferably between 1.0 and 1.2 mm, as viewed in the axial direction.

7. Multi-disc brake according to one of claims 1 to 6, **characterised in that** respective outer brake pads (18, 19) are associated with each of the two brake discs (3, 8) on their outer faces directed away from the respective other brake disc (3, 8),
the two brake discs (3, 8) are displaceably mounted on a hub serving as a brake disc hub, and
a hydraulic device is associated with the multi-disc brake arrangement (2), upon the actuation of which a first outer brake pad (18) associated with the first brake disc (3) can be connected by friction to the first brake disc (3), the first brake disc (3) can then be connected by friction to the first central brake pad (4) and the second central brake pad (11) can be connected by friction to the second brake disc (8), and finally the second brake disc (8) can be connected by friction to a second outer brake pad (19) associated with this second brake disc (8).

8. Central brake pad element (1) for use in multi-disc brakes according to one of claims 1 to 7, **characterised in that** the central brake pad element (1) is designed in accordance with the characterising part of claim 1.

## Revendications

1. Frein multidisques pour véhicules, en particulier frein à deux disques pour véhicules automobiles, comprenant un élément de garniture de frein central (1) disposé dans un pas de disques de frein entre deux disques de frein (3, 8) voisins dans la direction axiale
**caractérisé en ce que**
l'élément de garniture de frein central (1) comprend une couche de support qui porte sur une première face de support associée à un premier disque de frein (3) une premier garniture de frein (4) et sur une seconde face de support associée à un second disque de frein (8) une seconde garniture de frein (11), la couche de support étant conçue comme une couche d'amortissement (7), avec laquelle les vibrations des composants se produisant lorsque les freins sont actionnés peuvent être amorties et/ou absorbées,
**en ce que** les deux garnitures de frein (4, 11) sont disposées respectivement sur un porte-garniture rigide (5, 10), de sorte que les garnitures de frein (4, 11) sont reliées directement par le porte-garniture rigide (5, 10) à la couche d'amortissement (7),
**en ce que** pour relier les garnitures de frein (4, 11) à la couche d'amortissement (7), il est prévu une liaison par coopération de forces, en particulier une liaison par vis et/ou rivet (12) et éventuellement une liaison par coopération de matières, en particulier une liaison adhésive résistante aux hautes températures (6, 9),
**en ce que** les porte-garniture (5, 10) comprennent des zones de porte-garniture (15) dépassant des garnitures de frein (4, 11), et
**en ce que** la liaison par coopération de forces (12) des porte-garniture (5, 10) est prévue dans la zone dépassant des garnitures de frein (4, 11).

2. Frein multidisques selon la revendication 1, **caractérisé en ce que** la couche d'amortissement (7) comprend une épaisseur de couche prédéfinie en fonction des paramètres d'amortissement prédéfinis et est conçue au moins dans les zones latérales associées aux garnitures de frein (4, 11) à partir d'un matériau flexible de manière réversible, comprenant en particulier des propriétés élastomères.

3. Frein multidisques selon la revendication 2, **caractérisé en ce que** la couche d'amortissement (7) est formée par une couche d'élastomère.

4. Frein multidisques selon la revendication 3, **caractérisé en ce que** la couche d'amortissement (7) comprend un noyau en forme de plaque (14) composé d'un matériau rigide, de préférence d'un matériau de tôle, sur lequel une couche d'élastomère (13) est appliquée de part et d'autre, de préférence une couche de caoutchouc est vulcanisée.

5. Frein multidisques selon la revendication 2, **caractérisé en ce que** la couche d'amortissement est formée d'un matériau en plastique et/ou en graphite et/ou en silicone.

6. Frein multidisques selon l'une quelconque des revendications 1 à 6, **caractérisé en ce que** la couche d'amortissement (7) vue dans la direction axiale comprend une épaisseur de couche comprise entre 0,5 et 2 mm, de préférence entre 0,8 et 1,5 mm, de manière préférée entre toutes entre 1,0 et 1,2 mm.

7. Frein multidisques selon l'une quelconque des revendications 1 à 6, **caractérisé en ce que** respectivement une garniture de frein extérieure (18, 19) est associée aux deux disques de frein (38) sur leur face extérieure opposée à chaque autre disque de frein (3, 8),
**en ce que** les deux disques de frein (3, 8) sont logés de manière mobile sur un moyeu de roue comme moyeu de disque de frein, et
**en ce qu**'un système hydraulique est associé à l'agencement de frein multidisques (2), et lors de son actionnement une première garniture de frein extérieure (18) associée au premier disque de frein (3) peut être amenée en liaison de friction avec le premier disque de frein (3), le premier disque de frein (3) est ensuite en liaison de friction avec la première garniture de frein centrale (4) ainsi que la seconde garniture de frein centrale (11) en liaison de friction avec le second disque de frein (8) et enfin le second disque de frein (8) en liaison de friction avec une seconde garniture de frein extérieure (19) associée à ce second disque de frein (8).

8. Elément de garniture de frein central (1) destiné à être utilisé dans des freins multidisques selon l'une quelconque des revendications 1 à 7, **caractérisé en ce que** l'élément de garniture de frein central (1) est conçu selon la partie caractérisante de la revendication 1.
